Europäisches Patentamt

European Patent Office

Office européen des brevets

(11) Publication number: **0 491 297 A1**

## EUROPEAN PATENT APPLICATION

(21) Application number: **91121418.7**

(22) Date of filing: **13.12.91**

(51) Int. Cl.5: **B25B 17/02**, B60B 29/00

(30) Priority: **18.12.90 IT 5343790 U**

(43) Date of publication of application:
**24.06.92 Bulletin 92/26**

(84) Designated Contracting States:
**AT BE CH DE ES FR GB LI NL SE**

(71) Applicant: **LA COMMERCIALE ACCESSORI S.r.l.**
**Via Liguria, 24**
**I-10099 San Mauro Torinese (Torino)(IT)**

(72) Inventor: **Barera, Umberto**
**Via IV Novembre, 53**
**I-10099 San Mauro Torinese (Torino)(IT)**

(74) Representative: **Buzzi, Franco**
**c/o Jacobacci-Casetta & Perani S.p.A. Via Alfieri, 17**
**I-10121 Torino(IT)**

(54) Manoeuvring device for fixing screws or nuts of heavy motor vehicle wheels and the like.

(57) The device includes a body (1) carrying an input shaft (7) and an output shaft (8) coaxial with each other and coupled for rotation by a reduction gear (14) supported in the body (1). The body (1) is generally prismatic and fits slidably so as to be adjustable in height in an upright support (2) between two parallel guide walls (3) thereof. The body (1) can be clamped to the support (2) in the preselected position.

FIG. 1

The present invention relates in general to devices for operating wheel-bolts or nuts for heavy vehicles and the like.

More particularly, the invention relates to a device of the type including a body carrying a rotary input shaft to which an operating lever can be coupled and a rotary output shaft to which a tool for acting on the wheel-nuts or bolts can be coupled, the shafts being coaxial and coupled for rotation by a reduction gear supported in the body.

The object of the present invention is to provide a device of the type indicated above which is easy to produce and very effective and convenient in use, which can easily be adapted to operate on bolts or nuts of different dimensions, and which enables a considerable torque to be exerted on the nuts or bolts to be unscrewed or screwed up with little effort on the part of the user.

According to the invention, this object is achieved by virtue of the fact that the body is of a generally prismatic shape with two parallel sides and fits slidably so as to be adjustable in height in an upright support with a base for bearing on the ground and two parallel guide walls which face the sides of the body, and in that it also includes means for selectively clamping the body to prevent it from sliding relative to the support.

The invention will now be described in detail with reference to the appended drawings, provided purely by way of non-limiting example, in which:

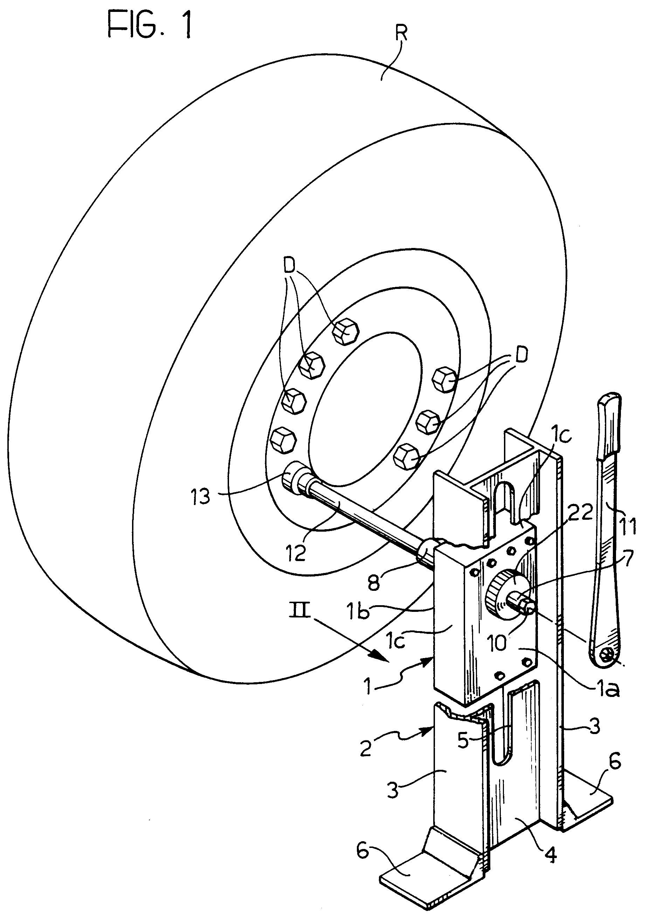

Figure 1 is a partially-sectioned axonometric view showing the device according to the invention in use on a wheel of a heavy truck,

Figure 2 is a front elevational view taken on the arrow II of Figure 1, and

Figure 3 is a partial vertical section taken on the arrow III-III of Figure 2.

With reference to the drawings, the device according to the invention is constituted essentially by a parallelepipedal box-shaped body 1 and an upright support 2 in which the body 1 can slide so as to be adjustable in height.

More particularly, the support 2 is constituted by a H-section including two vertical side walls 3 joined substantially centrally by a transverse vertical plate 4 with a central longitudinal slot 5. Two opposed L-shaped feet 6 fixed to the lower ends of the two side walls 3 constitute the base of the support 2 which bears on the ground.

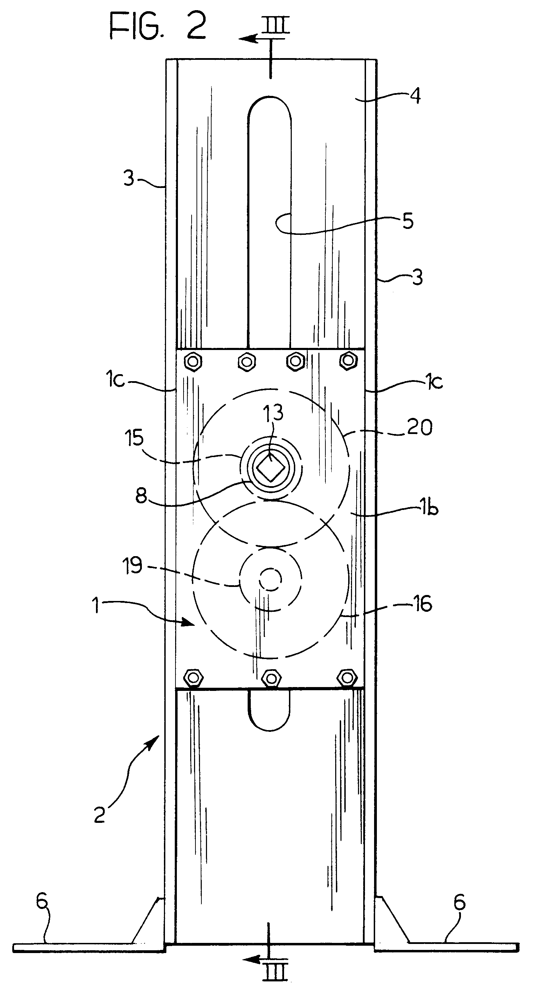

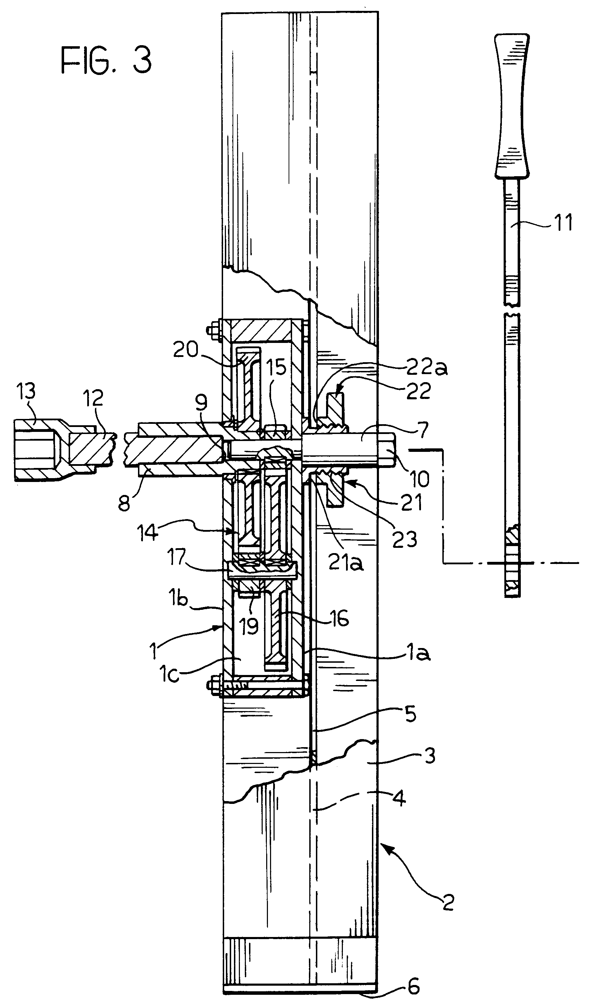

The body 1 has two major faces, a front face 1a and a rear face 1b, and two side faces 1c. As can clearly be seen in Figures 2 and 3, the body 1 is fitted between the two side walls 3 of the support 2 on one side of the transverse plate 4 with its side faces 1c adjacent and parallel to the walls 3.

Coaxial input and output shafts 7 and 8 project from the major faces 1a and 1b of the body 1, respectively, and are coupled rotatably at 9. The input shaft 7 extends freely through the slot 5 in the plate 4 and its free end has a shank 10 with a polygonal profile onto which an operating lever 11 for rotating the shaft can be fitted. The output shaft 8 is hollow and its free end houses an extension 12 carrying a bush 13 which is intended to be coupled with bolts or nuts D for fixing a truck wheel R to its support.

The drive is transmitted from the input shaft 7 to the output shaft 8 by means of a reduction gear 14 housed in the body 1 and including, in generally known manner, a toothed sprocket 15 keyed to the input shaft 7 and meshed with a gear 16 carried by an intermediate shaft 17 parallel to the shafts 7 and 8. A sprocket 19 mounted on the intermediate shaft 17 in turn meshes with a gear 20 keyed to the output shaft 8.

As explained above, the body 1 is free to slide vertically along the support 2 in order to position the bush 13 at the level of the nut or bolt D which, at any particular time, is to be unscrewed or screwed up by the rotation of the shafts 7 and 8 in one sense or in the opposite sense by means of the operating lever 11. In order to clamp the body 1 firmly to the support 2 at the preselected height, an internal sleeve 21 and an external knurled ring nut 22, rotatable coaxially on the input shaft 7, have respective abutment surfaces 21a, 22a which react against the plate 4 from opposite sides. The sleeve 21 and the ring nut 22 can be moved towards and away from each other by means of a threaded coupling 23 so as to clamp the body 1 to prevent it from sliding relative to the support or to release the body 1, respectively.

The arrangement of the device described above enables the bolts or nuts D to be unscrewed/screwed up easily in use, with little effort, particularly by virtue of the reaction of the body 1 against the side walls 3 of the support 2 which house it.

**Claims**

1. A device for operating wheel-bolts or nuts for heavy vehicles and the like, including a body carrying a rotary input shaft to which an operating lever can be coupled and a rotary output shaft to which a tool for acting on the wheel-nuts or bolts can be coupled, the shafts being coaxial and coupled for rotation by a reduction gear supported in the body, characterised in that the body (1) is of a generally prismatic shape with two parallel sides (1c) and fits slidably so as to be adjustable in height in an upright support (2) with a base (6) for bearing on the ground and two parallel guide walls (3) which face the sides (1c) of the body (1), and in that it also includes means (21, 22) for selectively clamping the body (1) to prevent it from sliding relative to the support (2).

2. A device according to Claim 1, characterised in that the two guide walls (3) of the support (2) are interconnected by a substantially central plate (4) perpendicular to the walls (3) and having a central, longitudinal slot (5) through which the input shaft (7) extends slidably and rotatably, and in that the clamping means comprise an internal sleeve (21) and an external ring nut (22) which are coaxial with and rotatable on the input shaft (7) and have respective abutment surfaces (21a, 22a) which react against the plate (4) from opposite sides and can be moved towards and away from each other by means of a threaded coupling (23) between the sleeve (21) and the ring nut (22).

3. A device according to Claim 1 or Claim 2, characterised in that the base of the support (2) is constituted by a pair of L-shaped feet (6) fixed to the lower ends of the guide walls (3).

FIG. 1

FIG. 2

FIG. 3

European Patent
Office

# EUROPEAN SEARCH REPORT

Application Number

EP    91 12 1418

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-598 026 (R.MOERLINI)<br>* the whole document *<br>--- | 1 | B25B17/02<br>B60B29/00 |
| X | FR-A-2 278 505 (Y.S.NIEPCERON)<br>* claims 1,2; figures 1-3 *<br>--- | 1 | |
| A | FR-A-2 445 758 (ETABLISSEMENTS E.ME.HY)<br>* claims; figures *<br>--- | 1 | |
| A | DE-A-3 049 228 (H.HEGEL)<br>--- | | |
| A | US-A-4 620 462 (P.PARKER)<br>--- | | |
| A | DE-U-8 717 101 (L.HESS)<br><br>----- | | TECHNICAL FIELDS SEARCHED (Int. Cl.5)<br><br>B25B<br>B60B |

The present search report has been drawn up for all claims

| Place of search | Date of completion of the search | Examiner |
|---|---|---|
| THE HAGUE | 12 MARCH 1992 | MAJERUS H.M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document